# EUROPÄISCHE PATENTSCHRIFT

(11) **EP 1 970 855 B1**
(45) Veröffentlichungstag und Bekanntmachung des Hinweises auf die Patenterteilung: **13.03.2019**
(21) Anmeldenummer: 08004682.4
(22) Anmeldetag: 13.03.2008
(51) Int. Cl.: G06Q 20/10, G06Q 40/08, G06Q 40/00

(54) **Elektronische Steuerungsvorrichtung sowie Verfahren zur Steuerungs von cellulär aufgebauten Alarmsystemen**
Electronic control device and method for controlling cellular alarm systems
Dispositif de commande électronique et procédé de commande de systèmes d'alarme cellulaires

(30) Priorität: 13.03.2007 WO PCT/EP2007/052362
(43) Veröffentlichungstag der Anmeldung: 17.09.2008
(73) Patentinhaber: Swiss Reinsurance Company Ltd., 8022 Zürich (CH)
(72) Erfinder: Dubinsky, William J., Hoboken, New Jersey 07030 (US)
(74) Vertreter: Leimgruber, Fabian Alfred Rupert

(56) Entgegenhaltungen:
- WO-A-2006/089588
- WO-A-2007/056873
- WO-A-2007/056880
- WO-A-2007/090702
- WO-A-2007/115884

## Beschreibung

Die Erfindung betrifft eine elektronische Steuerungsvorrichtung sowie ein Verfahren zur Steuerung von zellulären Alarmsystemen, wobei mittels einer Sensorik der Steuervorrichtung physikalische Messparameter von sich ereignender Messereignissen getriggert und basierend auf vordefinierten Schwellwerten gefiltert werden. Die Alarmsysteme werden elektronisch selektiert und aktiviert, falls mindestens einer der Schwellwerte überschritten wird. Zur Aktivierung werden mittels der Steuervorrichtung dedizierte Aktivierungssignalen generiert und auf die Alarmsysteme übertragen.

### Stand der Technik

Viele Bereiche in Industrie und Technik können heute wegen der Komplexität der technischen Anwendungen nur partielle technische Lösungen realisiert werden. Insbesondere bei der differenzierten Signalerzeugung ist menschliche Interaktion in vielen Bereichen der Industrie, Technik und Wissenschaft immer noch notwendige Voraussetzung, sobald die Komplexität der beteiligten Vorrichtungen, erfassten Messparametern oder zu kontrollierenden Prozessen und Interaktionen mit der Umwelt ein gewisses Mass überschritt. So entzieht sich z.B. bei der Steuerung, Kontrolle und Überwachung dynamischer und/oder nicht-linearer Prozesse eine Automatisierung häufig dem Stand der Technik. Speziell hochgradig nichtlineare Prozesse können durch konventionellen Vorrichtungen technisch in den seltensten Fällen befriedigend gefasst werden. Viele technische Umsetzungen unterschiedlichster Arten von Frühwarn-Vorrichtungen, Bild- und/oder Mustererkennungsvorrichtungen (Pattern-Recognition), insbesondere bei analogen Meßdaten oder bei notwendiger Selbstorganisierung der Vorrichtung, sind in vielen Fällen im Stand der Technik noch heute nicht gelöst sind. Die meisten natürlichen Prozesse besitzen mindestens teilweise einen nichtlinearen Ablauf und tendieren ausserhalb eines schmalen linearen Gleichgewichtbereichs zu exponentiellem Verhalten. Eine effiziente und zuverlässig funktionierende Frühwarnsignalerzeugung und automatisierte Betriebsstörungsbehebung kann für viele dieser technischen Einrichtungen deshalb überlebenswichtig sein. Dies geht von komplexen technischen Vorrichtungen wie Flugzeugen, Robotern, Fabrikationsstrassen etc., mit jeweils vielen tausend Sensoren und Meßsignalen, bis zu Überwachungs-, und Steuersystemen basierend auf unkontrollierbaren Umwelteinflüssen, wie meteorlogischen (Stürme, Hurrikans, Überschwemmungen), geologischen (Erdbeben), wirtschaftbedingten (Börse) Einflüssen. In den sensiblen Dynamiken der heutigen Märkte sind für Industrie und Gewerbe, insbesondere Grossindustrie die Auswirkungen von Betriebsausfälle oder Betriebseinschränkungen von einzelnen Schlüsselvorrichtungen, ganzen Anlagen, aber auch externen Einflüssen wie Umweltkatastrophen, Hochwasser, Hurrikans, Erdbeben, Terroristische Anschläge etc. kaum mehr selbstständig zu stabilisieren. Als berühmt Beispiele dafür können z.B. der Ausfall einer Speicherchip-Herstellungsanlage in Japan/Korea in den 90-er Jahren mit ihrer ganzen Folgewirkung auf die damit verbundenen Hersteller und Märkte oder die Auswirkungen von Katastrophen und kriegsbedingten Ausfällen von Transport- und Fördervorrichtungen in der Ölindustrie angeführt werden. Die Wurzeln dieses Phänomen sind zum einen in der Globalisierung der Märkte mit einer globalen dynamischen Konkurrenz zu suchen, bei welcher Produktionsstandorte, Produkte, Arbeitskräfte etc. schnell verschoben werden können und verschoben werden, zum anderen aus den in vielen Bereichen immer kürzeren Produktionszyklen. Auch die immer weiter verbreitete Börsenkodierung grosser Unternehmen kann Korrelationen von Instabilitätseffekten in grossem Ausmass verstärken. Das in den internationalen Finanzmärkten gebundenen Kapital ist immens und folgt seinen eigenen, zum übrigen Markt nur teilweise korrelierten, schwer triggerbaren Dynamiken. Diese Gründe wirken mit, dass heute grössere Betriebsausfälle oder Betriebseinschränkungen in vielen industriellen Bereichen kaum mehr abgefangen werden können, ohne dass differenzierte Kontroll- und/oder Alarmeinsatz- und/oder Betriebsinterventionssysteme mitwirken. Alarmsysteme können auf ganz unterschiedlichen Grundlagen basieren. So können sie z.B. bei einem konkreten Betrieb oder Produktion für bestimmte Fälle direkt automatisiert oder teilweise automatisiert eingreifen, insbesondere den technischen Betrieb der Anlage übernehmen, umleiten oder anderweitig ersetzen. Dies kann z.B. durch den Einsatz von Ersatzvorrichtungen (wie z.B. auf den grossen Frachtschiffen durch das wechselseitige Aktivieren/Deaktivieren von Ersatzantriebsvorrichtungen, Aktivieren/Deaktivieren von Notstromaggregaten, Kühlsystemen, Unterstützungssystemen unter Berücksichtigung des Energieverbrauchs etc. etc.). Eines der Grundprobleme all dieser Systeme liegt darin, dass Automatisierungen und/oder automatisierte Steuerungen der Alarmsysteme meist selbst sehr instabil und störanfällig sind. Einer der Ursachen liegt in der grossen Komplexität der auftretenden Ereignisse (Hurrikans, Erdbeben etc.) bzw. der Komplexität der zugeordneten technischen Anlagen und ihrer Wechselwirkung mit der Umwelt. Serienausfälle und/oder korrelierte Betriebsausfälle oder Störungen z.B. durch Umwelteinflüsse sind schwer oder gar nicht im Voraus zu detektieren. Sowohl bei der Erfassung und der Überprüfung der Messparameter als auch Steuerung und Kontrolle der Alarmsysteme werden so heute noch riesige Ressourcen an Arbeitskräften und Zeitaufwand verbraucht. Durch die fehlende Automatisierung fehlt den Systemen meist auch die notwendige Geschwindigkeit, um auf veränderte Bedingungen eingehen zu können. Ebenso ist es schwierig, das Verhalten der Systeme abzuschätzen, da ohne Automatisierung selten identisches Verhalten reproduziert werden kann und gerade bei chaotischen Systemen kleinste Änderungen grosse Auswirkungen haben kann. Dies macht die Systeme des Standes der Technik anfällig und schwer überprüfbar.

Hingegen sind rückblickende Analysemittel im Stand der Technik in den unterschiedlichsten Ausprägungen bekannt. Sie könne jedoch nicht bei Alarmsystemen verwendet werden, da sie statisch sind bzw. erst rückwirkend beachtet werden können. Zu solchen Analysehilfsmittel gehört z.B. der sog. Industry Index Trigger, welcher Index mittels definierten bzw. fixierten Gewichtesparameter für unterschiedliche geographische Einheiten und Industriezweige gewichtet inkrementiert wird. Der entsprechende Indexwert wird von einem Index Provider (wie z.B. PCS in der USA) generiert und wird auch als sog. Fix-Weight Industry Index Trigger oder FII Trigger bezeichnet. Er bietet einige technische Verbesserungen gegenüber dem im Stand der Technik ebenfalls bekannten Basic Industry Index Trigger und kann als Alternative zu einem Modeled Loss Trigger dienen. Modeled Loss Trigger und FII Trigger umfassen gegensätzliche Grundrisiken: (a) Der FII-Trigger berücksichtigt Unterschiede in den Markanteilen pro Ereignis und geographischer Einheit nicht, d.h. er ignoriert bekannte Parameter betreffen vertraglichen oder anders definierten Interventionsbestimmungen (Policy Terms), Inuring Covers und die sog. Underwriting Kriterien in einem bestimmten Staat (wie z.B. gesetzliche Vorgaben) sowie (b) Modeled Loss Trigger: Verbindet die führenden oder marktbeherrschenden Unternehmen mit dem Industrielevel sekundären Unsicherheiten, die im FII Trigger nicht vorliegen. Der optimale Trigger sollte wahrscheinlich zwischen diesen beiden Extremen liegen abhängig von der entsprechenden Übertragung. Solche statischen Analysemittel können jedoch nicht wesentlich zu einer Automatisierung der Steuerung von Alarmsystemen in den betroffenen Gebieten beitragen, sondern allenfalls eine vorgängige Hilfe zur Konstruktion solcher Alarmsysteme bieten.

WO 2007/115884 offenbart eine automatisierte Trigger und Aktivierungsvorrichtung zur Kopplung zweier wechselseitig aktivierbarer Kontroll- oder Betriebsinterventionssysteme.

WO 2007/090702 offenbart ein System und entsprechendes Verfahren für Aktivierungs- und Synchronisierungsvorrichtungen zur Kopplung zweier abgestuft abhängiger, automatisierter Kontroll- oder Interventionssysteme.

WO 2007/056880 offenbart eine automatisierte Triggervorrichtung und entsprechendes Verfahren basierend auf rückgekoppelten, zeitabhängigen Triggerparameter oder Messwerten zum dynamischen Triggern aufkommender oder sich ereignender Wirbelstürme für integrierte Kontrollvorrichtungen oder Steuervorrichtungen oder Frühwarnsysteme.

WO 2007/056873 offenbart ein System und entsprechendes Verfahren zur automatisierten Bestimmung von rückgekoppelten zeitabhängigen Triggerindices für Kontrollvorrichtungen mehrstufiger Schadendeckungssysteme bei aufkommendem oder sich ereignendem Wirbelsturm. Die mehrstufigen Schadendeckungssysteme umfassen mindestens eine zweite Stufe basierend auf von Benutzereinheiten übertragenen Geldbetragswerten, wobei die zweite Stufe beim Überschreiten eines vordefinierten Schadenslimitschwellwertes aktivierbar ist.

WO 2006/089588 offenbart ein automatisiertes Überwachungsverfahren und ein Risikoüberwachungssystem zur automatisierten Kreditrisikoüberwachung eines Portfolios, wobei Unternehmensdaten verschiedener Unternehmen auf eine Überwachungseinheit übertragen und ausgewertet werden.

### Technische Aufgabe

Es ist eine Aufgabe dieser Erfindung eine elektronische Steuerungsvorrichtung sowie ein entsprechendes Verfahren zur Steuerung von zellulär aufgebauten Alarmsystemen vorzuschlagen, welche die oben erwähnten Nachteile nicht aufweisen. Insbesondere soll es eine Lösung sein, welche erlaubt beim Triggern eines vordefinierten Messereignisses mittels der Steuerungsvorrichtung dedizierte Steuerungssignale für messereignis-spezifisch selektierte Alarmsysteme zu generieren und mittels der Alarmsysteme automatisiert durch das Messereignis erzeugte Betriebsstörungen bei Betriebsvorrichtungen automatisiert zu beheben. Insbesondere soll es eine Lösung sein, welche erlaubt, die Steuerung solcher Alarmsysteme zu Automatisieren, ohne dass die Systeme an Stabilität einbüssen. Gleichzeitig soll das System durch die Automatisierung Vorteile an Geschwindigkeit und Einsparungen im Zeitaufwand etc. aufweisen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur elektronischen Steuerung von zellulären Alarmsystemen mittels einer Sensorik einer Steuervorrichtung physikalische Messparameter von sich ereignender Messereignissen getriggert und basierend auf vordefinierten Schwellwerten gefiltert werden und wobei die Alarmsysteme mittels der Steuervorrichtung elektronisch selektiert und aktiviert werden, falls mindestens ein entsprechender Schwellwert eines Messereignisses überschritten wird, und wobei zur Aktivierung mittels der Steuervorrichtung dedizierten Aktivierungssignalen generiert und auf die jeweiligen Alarmsysteme übertragen werden, dass mittels eines Countermoduls der Steuervorrichtung innerhalb eines vordefinierten Zeitfensters bei jeder Aktivierung Aktivierungsparameter des durch die Steuervorrichtung generierten Aktivierungssignale kumuliert und in einer Speichereinheit der Steuervorrichtung als Countersignal abgespeichert werden, wobei jedes Aktivierungssignal mindestens einen Aktivierungsparameter entsprechend dem Umfang der Aktivierung des entsprechenden Alarmsystems umfasst, dass basierend auf dem kumulierten Countersignal in Kombination mit der geographischen Verteilung der Alarmsysteme innerhalb des mittels der Steuervorrichtung und den zugeordneten Sensorik überwachten Gebiets mittels einem MonteCarlo-Moduls zugeordnete Aktivierungsindexparameter bestimmt werden, welche Aktivierungsindexparameter mindestens eine ortsunabhängige mittlere Aktivierung der Alarmsysteme im Gebiet umfassen, dass die Messparameter des Messereignisses geographische Ortsparamter sowie physikalische Messparameter umfassen, wobei mittels eines Filtermoduls nach Ablauf des Zeitfensters der Aktivierungsindexparameter mittels eines topographischen Grids des überwachten Gebietes dynamisch basierend auf den geographische Ortsparameter sowie physikalischen Messparameter gewichtet und in einer gridbasierten, topographischen Lookup-Table abgespeichert werden, wobei zur dynamischen Gewichtung die Messparameter mittels einem Extrapolations-Modul der Steuervorrichtung basierend auf abgespeicherten modellierten Ereignisfunktionen fortgepflanzt werden, und dass die auf die Alarmsysteme übertragenen Aktivierungssignalen gridzellenweise abgestuft basierend auf den dynamischen Lookup-Table Elementen generiert werden, wobei die jeweiligen Aktivierungsparameter eines Aktivierungssignals dem jeweiligen dynamischen Lookup-Table Element entsprechen. Die physikalische Messparameterder sich ereignender Messereignissen können z.B. Windstärke und/oder Temperaturparameter und/oder Luftdruck und/oder Feuchtigkeitsparameter und/oder seismische Bebenfaktoren umfassen. Die Steuerungsvorrichtung kann z.B. eine Netzwerkschnittstelle umfassen, wobei die Steuerungsvorrichtung über die Netzwerkschnittstelle mit der Sensorik verbunden ist, und wobei die Sensorik in zelluläre, geographisch und/oder topologisch definierbare Einheiten oder Zonen angeordnet sind und mittels der Netzwerkschnittstelle geophysikalische, atmosphärische und/oder maritime physikalische Messparameter von der Sensorik auf die Steuerungsvorrichtung übertragen werden. Die Übertragung der Messparameter von der Sensorik auf die Steuerungsvorrichtung kann z.B. periodisch und/oder auf Request der Steuerungsvorrichtung und/oder der Sensorik erfolgt. Die Sensorik kann z.B. Messsensoren umfassen, die mit der Sensorik über eine Luftschnittstelle oder eine fest verdrahtete Schnittstelle oder über eine kontaktbehaftete Schnittstelle verbunden sind. Die Erfindung hat u.a. den Vorteil, dass durch die dynamische Gewichtung der Lookup-Table in Kombination mit den übrigen Erfindungsmerkmalen eine um vieles grössere Genauigkeit und Sicherheit bei der Aktivierung erreicht wird. Gleichzeitig steigt die Transparenz des Systems erheblich. Die Sensorik können z.B. mindestens Sensoren zur Messung physikalischer Ereignisparameter eines Interventionsereignisses umfassen, wobei die Sensoren einem bestimmten Gebiet und/oder mindestens einer Betriebsvorrichtung zugeordnet sind. Die Erfindung hat weiter den Vorteil, dass es auch bei der vollständigen Automatisierung vollkommen stabil bleibt, insbesondere bei schlecht detektierbaren Ereignissen mit kleinem statistischem Auftreten. Durch die dynamische Automatisierung passt sich das System schnell und selbständig an neue Verhältnisse an. Dies war bisher so im Stand der Technik nicht möglich. Mit anderen Worten wird durch die erfindungsgemässe Lösung eine bis anhin im Stand der Technik nicht bekannte technische Optimierung und Automatisierung des Funktionieren der Alarmsysteme erreicht. Die Erfindung hat weiter u.a. den Vorteil, dass im Gegensatz zum Stand der Technik effektive physikalische Messgrössen parallel zu Modellbestimmungen dynamisch verwendet werden können. Insbesondere müssen z.B. auch Rahmenparameter der einzelnen Modulfunktionen des Extrapolationsmoduls nicht vorgängig fixiert werden.

In einer Ausführungsvariante umfasst die Sensorik der elektronischen Steuervorrichtung Messvorrichtungen zur Detektion von Betriebsstörungen von zugeordneten Betriebsvorrichtungen, wobei mittels eines Interfacemoduls Betriebsstörungsparameter der betroffenen Betriebsvorrichtungen auf die Steuervorrichtung übertragen werden und wobei die Aktivierungssignale zusätzlich basierend auf den Betriebsstörungsparameter generiert werden. Diese Ausführungsvariante hat u.a. den Vorteil, dass die Gewichtung zusätzlich mit den Betriebsstörungsparameter normiert werden kann. Zur Normierung kann die Gewichtung z.B. auch auf dem PCS (Property Claim Services) oder einem ähnlichen Index basieren. Die Aktivierungssignale können zudem nicht nur messereignis-spezifisch sondern auch betriebsvorrichtungs-spezifisch und/oder betriebsstörungs-spezifisch genauer angepasst werden, was die Effizienz des automatisierten Systems wesentlich erhöht. Als Ausführungsvariante kann die Sensorik Mittel zum dynamischen Detektieren und Übermitteln der physikalischen Messparameter umfassen. Diese Ausführungsvariante hat u.a. den Vorteil, dass sie ohne weiteres Zutun automatisiert auf die aktuellsten Ereignisse reagieren kann. Dies kann mittels der vorliegenden elektronischen Steuerungsvorrichtung problemlos als Real-Time-Aktivierung realisiert sein.

In einer anderen Ausführungsvariante wird beim Auslösen des Zeitfensters die Steuervorrichtung zur Aktivierung der Alarmsysteme nur freigeschaltet, falls ein Stapelspeicherhöhenwert eines zugeordneten Aktivierungsstapelspeichers erreicht ist. Der Aktivierungsstapelspeicher kann z.B. vor Auslösen des Zeitfensters mittels mindestens einer einem Messereignis zugeordneten Aktivierungseinheiten schrittweise inkrementiert werden, wobei innerhalb des Zeitfensters der Stapelspeicherhöhenwert basierend auf dem Countersignal des Countermoduls dekrementiert wird und wobei nach Ablauf des Zeitfensters basierend auf dem Stapelspeicherhöhenwert Vergütungsparameter entsprechend der beanspruchten Leistung auf die Aktivierungseinheiten übertragen werden. Diese Ausführungsvariante hat u.a. den Vorteil, dass bei einem derartigen Aktivierungsspeicher eine Reduktion des notwendigen Stapelspeicherhöhenwertes erreicht werden kann, was das System konkurrenzfähiger und besser angepasst macht. Zusätzlich erlaubt die Zuordnung eine zusätzliche Stabilisierung des Betriebs der Alarmsysteme bzw. der elektronischen Steuerungsvorrichtung.

In einer weiteren Ausführungsvariante umfassen die Alarmsysteme einen zugeordnet abgespeicherten Klassierungsfaktor mit mindestens zwei unterschiedlichen Aktivierungsklassen, wobei jedes Alarmsystem mindestens einer Aktivierungsklasse zugeordnet ist und beim Überschreiten des kumulierten Countersignals des Countermoduls die Steuerungsvorrichtung automatisch die Aktivierungsklasse der Alarmsysteme wechselt. Diese Ausführungsvariante hat u.a. die gleichen Vorteile wie die Vorhergehende. Darüber hinaus können die Aktivierungssignale bzw. die selektierten Alarmsysteme einfacher der Stärke und/oder Umfang der auftretenden Messereignisse angepasst werden. Ebenfalls lasses sich die notwendigen Alarsysteme einfacher an die Stärke und/oder Umfang der auftretenden Messereignisse anpassen.

In einer wieder anderen Ausführungsvariante umfasst die elektronische Steuerungsvorrichtung Mittel zum verschlüsselten und zugriffskontrollierten Übertragen der Aktivierungssignale und/oder der Aktivierungsparameter, wobei zur Entschlüsselung der zugriffskontrollierten Aktivierungsimpulses gemäss übertragenen Zugriffsrequestdaten ein Datentoken generiert wird und an die entsprechenden Alarmsysteme übermittelt wird, wobei der Datentoken jeweils Daten, welche mindestens Teile eines entsprechenden Schlüssel zu dem zugriffskontrollierten verschlüsselten Aktivierungssignal umfassen, oder eine Zugriffserlaubnis auf einen Schlüssel zum Entschlüsseln des Aktivierungssignals umfasst. Der Datentoken kann z.B. verschlüsselt und/oder elektronisch signiert sein. Diese Ausführungsvariante hat mit insbesondere bei dezentralisierten in einem Netzwerk angeordneten Alarmsystemen und/oder Betriebsvorrichtungen den Vorteil, dass die Sicherheit des Systems wesentlich erhöht werden kann, ohne dass die Vorteile der Netzwerkkoppelung aufgegeben werden müssten. Ganz allgemein hat die Ausführungsvariante jedoch u.a. den Vorteil, dass die Vorrichtung einen hohen Sicherheitsstandart und ein technisch stabiles Verhalten im Austausch zwischen den Systemen erlaubt. Wie erwähnt kann der Datentoken kann z.B. verschlüsselt und/oder elektronisch signiert sein. Insbesondere kann die Verschlüsselung beispielsweise via Public Key Kryptographie, insbesondere SSL (Secure Sockets Layer) oder HTTPS, durchgeführt werden.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:

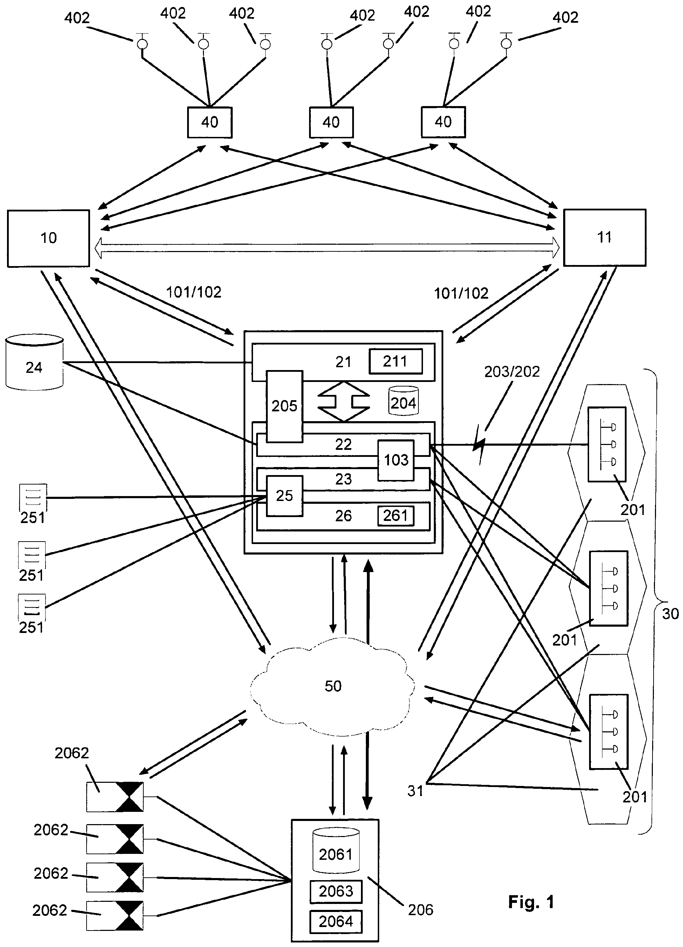

Figur 1 zeigt ein Blockdiagramm, welches schematisch eine elektronische Steuerungsvorrichtung 20 sowie ein entsprechendes Verfahren zur Steuerung von zellulären Alarmsystemen 10/11 zeigt, welche zur Realisierung der Erfindung verwendet werden kann. Mittels einer Sensorik 201 der Steuervorrichtung 20 werden physikalische Messparameter 20) von sich ereignender Messereignissen 203 gemessen und erfasst und basierend auf vordefinierten Schwellwerten 204 gefiltert. Die Alarmsysteme 10/11 werden elektronisch selektiert und aktiviert, falls mindestens einer der Schwellwerte 204 überschritten wird. Zur Aktivierung werden mittels der Steuervorrichtung 20 dedizierte Aktivierungssignalen 101 generiert und auf die Alarmsysteme 10/11 übertragen. Mittels eines Countermoduls 21 der Steuervorrichtung 20 werden innerhalb eines vordefinierten Zeitfensters 205 bei jeder Aktivierung die generierten Aktivierungssignale 101 als Countersignal 211 kumuliert. Nach Ablauf des Zeitfensters 205 wird das kumulierte Countersignal 211 mittels eines topographischen Grids 31 dynamisch basierend auf geographische Ortsparameter 2021 sowie physikalischen Messparameter 2022 der Messparameter 211 gewichtet und in einer gridbasierten, topographischen Lookup-Table 25 abgespeichert. Die auf die Alarmsysteme 10/11 übertragenen Aktivierungssignalen 101 werden gridzellenweise abgestuft basierend auf den dynamischen Lookup-Table Elementen 251 generiert die Alarmsysteme 10/11 entsprechend aktiviert.

Figur 1 illustriert eine Architektur, die zur Realisierung der Authentifikation der Erfindung verwendet werden kann. Figur 1 zeigt ein Blockdiagramm, welches schematisch eine erfindungsgemässe elektronische Steuervorrichtung 20 und ein entsprechendes Verfahren zur elektronischen Steuerung von zellulären Alarmsystemen 10/11. Mittels einer Sensorik 201 einer Steuervorrichtung 20 werden physikalische Messparameter 202 von sich ereignender Messereignissen 203 gemessen und/oder getriggert und basierend auf vordefinierten Schwellwerten 204 gefiltert. Messereignisse 203 können z.B. äussere oder innere Einflüsse auf Vorrichtungen oder Anlagen umfassen, welche eine Störung des Betriebs oder eine anderweitige Schädigung nach sich ziehen können. Äusseren Einflüssen können z.B. Erdbeben, Feuerbrände, Wirbelstürme oder andere äussere Einwirkungen umfassen. Innere Einflüsse können z.B. Alterungs- oder Verschleissprozesse umfassen. Die Alarmsysteme 10/11 werden mittels der Steuervorrichtung 20 elektronisch selektiert und aktiviert, falls mindestens ein entsprechender Schwellwert 204 eines Messereignisses 203 überschritten wird. Die automatisierten Alarmsysteme 10/11 können z.B. automatisch ausgelöste Löschsysteme, Stromunterbruchs- oder Notgeneratorsysteme, Betriebskontrollsysteme mit automatisierten Steuer- und/oder Alarmvorrichtungen, Signalumwandlungs- oder Relaissysteme zur automatisierten Alarm- oder Kontrollsteuerauslösung etc. umfassen. Die physikalische Messparameter 202 der sich ereignender Messereignissen 203 können z.B. Windstärke und/oder Temperaturparameter und/oder Luftdruck und/oder Feuchtigkeitsparameter und/oder seismische Bebenfaktoren umfassen. Zur Aktivierung werden mittels der Steuervorrichtung 20 dedizierten Aktivierungssignalen 101 generiert und auf die jeweiligen Alarmsysteme 10/11 übertragen. In einer Ausführungsvariante kann die Sensorik 201 der elektronischen Steuervorrichtung 20 z.B. auch Messvorrichtungen 402 zur Detektion von Betriebsstörungen von zugeordneten Betriebsvorrichtungen 40 umfassen, wobei mittels eines Interfacemoduls 2011 Betriebsstörungsparameter 401 der betroffenen Betriebsvorrichtungen 40 auf die Steuervorrichtung 20 übertragen werden und wobei die Aktivierungssignale 101 zusätzlich basierend auf den Betriebsstörungsparameter 401 generiert werden. Wie erwähnt, werden die physikalische Messparameter 202 der Messereignisse 203 werden mittels entsprechender Sensorik 201 detektiert und auf die Steuerungsvorrichtung 20 übertragen. Die Sensorik 201 kann zentralisiert oder dezentralisiert z.B. über ein Netzwerk 50 für die Steuerungsvorrichtung 20 zugreifbar angeordnet sein. Die Messereignisse 203 könne jede Art der Notwendigkeit von Alarm und/oder Betriebsinterventionen umfassen. Betriebsinterventionen auf jeder Art von Betriebsstörungen technischer Anlagen oder Vorrichtungen beruhen, wie z.B. Betriebsausfällen, Betriebseinschränkungen oder irgendwelchen Schäden am Betreib. Messereignisse 203 können z.B. Naturereignisse oder Naturkatastrophen wie z.B. Erdbeben, Überschwemmungen, Dürren, Wirbelstürme etc. umfassen. Es können auch Messereignisse 203 sein, die durch Terroraktivitäten verursacht werden. Es kann sich bei den Messereignissen 203 aber auch um Ereignisse wie Brände, längere Energiezufuhrunterbrüchen, oder gar selbstverschuldeten Ereignisse, wie z.B. übermässige Alterung der Betriebsvorrichtungen oder unsachgemässe Handhabung oder Wartung sein. Die Alarmsysteme 10/11 können uni- oder bidirektional mit der elektronischen Steuerungsvorrichtung 20 verbunden sein. Die Verbindung kann über eine luft- und/oder landgestützte Verbindung, insbesondere festverbunden und/oder drahtlos, erfolgen. Die Sensorik 201 kann z.B. Sensoren zur Geschwindigkeits-, Temperatur- und/oder Treibstoffmessung oder anderen Bentriebsparametern einer Betriebsvorrichtung 40 umfassen. Die Sensorik 201 kann z.B. auch ein Ortserfassungsmodul umfassen, mittels welchem Ortserfassungsmoduls Ortskoordinatenparameter des aktuellen Standortes der Messvorrichtung der Sensorik 201 oder der Betriebsvorrichtung 40 generiert werden und auf die Steuerungsvorrichtung 20 übermittelt werden. Insbesondere kann die Sensorik 201 auch Mittel zum Erfassen von benutzerspezifischen Messparameters eines Betreibers von Betriebsvorrichtungen 10/11 (z.B. Blutdruck, Alkohol, Eyetracking, Hautoberflächenspannung, Blutzucker, Herzschlag etc.) umfassen. Mittels eines Countermoduls 21 der Steuervorrichtung 20 werden innerhalb eines vordefinierten Zeitfensters 205 bei jeder Aktivierung Aktivierungsparameter 102 des durch die Steuervorrichtung 20 generierten Aktivierungssignale 101 kumuliert und in einer Speichereinheit 24 der Steuervorrichtung 20 als kumuliertes Countersignal 211 abgespeichert, wobei jedes Aktivierungssignal 101 mindestens einen Aktivierungsparameter 10/11 entsprechend dem Umfang der Aktivierung des entsprechenden Alarmsystems 10/11 umfasst.

Basierend auf dem kumulierten Countersignal 211 werden in Kombination mit einer geographischen Verteilung der Alarmsysteme 10/11 innerhalb des mittels der Steuervorrichtung 20 und den zugeordneten Sensorik 201 überwachten Gebiets 30 mittels einem MonteCarlo-Moduls 22 zugeordnete Aktivierungsindexparameter 103 bestimmt, welche Aktivierungsindexparameter 103 mindestens eine ortsunabhängige mittlere Aktivierung der Alarmsysteme 10/11 im Gebiet umfassen. Das kumulierte Countersignal 211 bzw. der Aktivierungsindexparameter 103 kann als Ausführungsvariante auch auf übertragenen Parametern des PCS (Property Claim Services) oder einem ähnlichen öffentliche oder privaten Index basieren. Die Messparameter 202 des Messereignisses 203 umfassen geographische Ortsparameter 2021 sowie physikalische Messparameter 2022. Der Aktivierungsindexparameter 103 wird mittels eines Filtermoduls 23 nach Ablauf des Zeitfensters 205 mittels eines topographischen Grids 31 des überwachten Gebietes 30 dynamisch basierend auf den geographische Ortsparameter 2021 sowie physikalischen Messparameter 2022 gewichtet und in einer gridbasierten, topographischen Lookup-Table 25 abgespeichert. Zur dynamischen Gewichtung werden die Messparameter 202 mittels eines Extrapolations-Modul 26 der Steuervorrichtung 20 basierend auf abgespeicherten modellierten Ereignisfunktionen 261 fortgepflanzt und/oder extrapoliert werden. Die Ereingisfunktionen 261 basieren auf physikalischen Modellen und können zugreifbar in der Steuerungsvorrichtung 20 abgespeichert sein. Die Selektion einer bestimmten Ereignisfunktionen 261 wird durch das Extrapolationsmodul 26 basierend auf den gemessenen Messparameter 202 durchgeführt. Entsprechende Filtermittel können in das Extrapolationsmodul 26 integriert sein oder als Teil des Filtermoduls 23 hardware-und/oder mindestens teilweise softwaremässig realisiert sein. Die Steuerungsvorrichtung 20 kann z.B. eine Netzwerkschnittstelle 207 umfassen, über welche sie mit der Sensorik 201 verbunden ist. Die Sensorik 201 kann z.B. in zelluläre, geographisch und/oder topologisch definierbare Einheiten oder Zonen angeordnet sein und mittels der Netzwerkschnittstelle 207 geophysikalische, atmosphärische und/oder maritime physikalische Messparameter 202 von der Sensorik 201 auf die Steuerungsvorrichtung 20 übertragen. Die Übertragung der Messparameter 202 von der Sensorik 201 auf die Steuerungsvorrichtung 20 kann beispielsweise periodisch und/oder auf Request der Steuerungsvorrichtung 20 und/oder der Sensorik 201 erfolgen. Die Sensorik 201 kann u.a. Messsensoren umfassen, die mit der Sensorik 201 über eine Luftschnittstelle oder eine fest verdrahtete Schnittstelle oder über eine kontaktbehaftete Schnittstelle verbunden sind. Die elektronische Steuerungsvorrichtung 20 und/oder die Alarmsysteme 10/11 können z.B. ein oder mehrere verschiedene physikalische Netzwerkschnittstellen, die auch mehrere unterschiedliche Netzwerkstandards unterstützen können, umfassen. Die physikalischen Netzwerkschnittstellen können z.B. Schnittstellen zu WLAN (Wireless Local Area Network), Bluetooth, GSM (Global System for Mobile Communication), GPRS (Generalized Packet Radio Service), USSD (Unstructured Supplementary Services Data), UMTS (Universal Mobile Telecommunications System) und/oder Ethernet oder einem anderen Wired LAN (Local Area Network) etc. umfassen. Dementsprechend kann das Netzwerk 50 für verschiedene heterogene Netzwerke stehen, wie z.B. ein Bluetooth-Netzwerk, z.B. für Installationen in überdachten Örtlichkeiten, ein Mobilfunknetz mit GSM und/oder UMTS etc., ein Wireless LAN z.B. basierend auf IEEE wireless 802.1x, aber auch einem Wired LAN, d.h. einem lokalen Festnetz, insbesondere auch dem PSTN (Public Switched Telephone Network) etc.. Prinzipiell ist zu sagen, dass das Verfahren und/oder System nicht an einen spezifischen Netzwerkstandart gebunden ist, sofern die erfindungsgemässen Merkmale vorhanden sind, sondern können, falls es über ein Netzwerk 50 realisiert ist, mit einem beliebigen LAN realisiert werden. Die Schnittstellen können nicht nur packet-switched Schnittstellen, wie sie von Netzwerkprotokollen wie z.B. Ethernet oder Tokenring direkt benutzt werden, sondern auch circuit-switched Schnittstellen, die mittels Protokollen wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse wie eine MAC- oder eine DLC-Adresse besitzen. Wie teilweise erwähnt, kann die Kommunikation über das LAN, beispielsweise mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über IEEE wireless 802.1x oder einen anderen Nutzkanal erfolgen.

Die auf die Alarmsysteme 10/11 übertragenen Aktivierungssignalen 101 werden gridzellenweise abgestuft basierend auf den dynamischen Lookup-Table Elementen 251 generiert, wobei die jeweiligen Aktivierungsparameter 102 eines Aktivierungssignals 101 dem jeweiligen dynamischen Lookup-Table Element 251 entsprechen. Dynamisch kann insbesondere bedeuten, dass die Alarmsysteme 10/11 direkt und/oder vollständig automatisiert durch die Steuerungsvorrichtung 20 aktiviert werden können, d.h. keinerlei Interaktion durch Betreiber und/oder Module/Vorrichtungen benötigt. Bei teilweise geldwertbasierten Systemen kann die Gewichtung z.B. auch eine dynamische Marktanalyse und Gewichtung der einzelnen Betriebsvorrichtungen 40 im Markt mittels entsprechenden Analysemodul und/oder Expertenmoduls umfassen. Dazu können notwendige Parameter des Marktes dynamisch z.B. von offiziellen beispielsweise Börsendaten etc. oder anderen Datenbanken bezogen und verwendet werden. Als Ausführungsvariante ist es z.B. auch vorstellbar, dass beim Auslösen oder Start des Zeitfensters 205 die Steuervorrichtung 20 zur Aktivierung der Alarmsysteme 10/11 nur freigeschaltet wird, falls ein vorbestimmter Stapelspeicherhöhenwert 2061 eines Aktivierungsstapelspeichers 206 der Steuervorrichtung 20 erreicht ist. Der Aktivierungsstapelspeicher 206 kann beispielsweise vor Auslösen des Zeitfensters 205 mittels mindestens einer einem Messereignis 203 zugeordneten Aktivierungseinheit 2062 schrittweise inkrementiert werden. Innerhalb des Zeitfensters 205 kann der Stapelspeicherhöhenwert 2061 z.B. basierend auf dem Countersignal 211 des Countermoduls 21 dekrementiert werden und z.B. nach Ablauf des Zeitfensters 205 basierend auf dem Stapelspeicherhöhenwert 2061 Vergütungsparameter entsprechend der beanspruchten Leistung auf die Aktivierungseinheiten 2062 übertragen werden. Die Inkrementierung kann z.B. mittels normierter und/oder geschützter und/oder übertragbarer Einheiten erfolgen. Die speicherbaren und geschützten Einheiten können als Ausführungsvariante auch z.B. speicherbare Geldbetragswerte und/oder entsprechende Datentokens umfassen. Die Aktivierung kann z.B. beim Übertragen der Einheiten auf die Alarmsysteme 10/11 durch die Steuerungsvorrichtung 20 selbst geschehen. Als Ausführungsvariante kann es sinnvoll sein, dass Mittel des Aktivierungsstapelspeichers 206 die Aktivierung der Steuerungsvorrichtung 20 steuert, was eine zusätzliche Kontrollfunktion und Sicherheit erlaubt.

Als Ausführungsvariante können die Alarmsysteme 10/11 einen zugeordnet abgespeicherten Klassierungsfaktor 2063 mit mindestens zwei unterschiedlichen Aktivierungsklassen 2064 umfassen. Jedes Alarmsystem 10/11 ist in diesem Ausführungsbeispiel mindestens einer Aktivierungsklasse 2064 zugeordnet. Beim Überschreiten des kumulierten Countersignals 211 des Countermoduls 21 wechselt die Steuerungsvorrichtung 20 automatisch die Aktivierungsklasse 2064 der Alarmsysteme 10/11. In Figur 1 ist dies symbolisch angedeutet durch die Referenznummern 10 und 11. Natürlich können solche unterschiedlichen Klassen von Alarmsystemen auch zusätzlich selbständig untereinander synchronisiert sein, wie das durch den Verbindungspfeil in Figur 1 angedeutet ist. Mit dieser Ausführungsvariante können die Aktivierungssignale bzw. die selektierten Alarmsysteme 10/11 einfacher der Stärke und/oder Umfang der auftretenden Messereignisse angepasst werden. Ebenfalls lasses sich die notwendigen Alarmsysteme einfacher an die Stärke und/oder Umfang der auftretenden Messereignisse anpassen. In einer Ausführungsvariante können bei teilweise geldwertbasierten, aktivierbarer Alarmsystemen 10/11 zur Aktivierung der Alarmsysteme 10/11 z.B. speicherbare und geschützte Datenelemente auf die Betriebsvorrichtungen 40 oder ihnen zugeordnete Systemeinheiten übertragen werden. Die Datenelemente können z.B. speicherbare Geldbetragswerte und/oder entsprechende Datentokens umfassen. Die Steuerungsvorrichtung 20 kann z.B. beim Überschreiten mindestens eines der Schwellwerte automatisiert Verrechnungsdaten mit Verrechnungsparameter zur Gutschrift und/oder Belastung von Geldbetragswerten an ein Clearingmodul übermittelt. Ebenfalls können in diesem Ausführungsbeispiel auch die Betriebsvorrichtungen 40 zur Inkrementierung eines Aktivierungsstapelspeichers mittels wertbasierten Datentokens beitragen. Datentoken können z.B. jeweils Daten, welche mindestens Teile eines entsprechenden Schlüssel zu dem zugriffskontrollierten verschlüsselten Inkrementierungsimpuls umfassen, oder eine Zugriffserlaubnis auf einen Schlüssel zum Entschlüsseln des Inkrementierungsimpuls umfassen. Datentoken können z.B. verschlüsselt und/oder elektronisch signiert sein. Die Verschlüsselung kann z.B. via Public Key Kryptographie, insbesondere SSL (Secure Sockets Layer) oder HTTPS, umfasst.

### Referenzliste

10/11 Alarmsystem
   101 Aktivierungssignal
   102 Aktivierungsparameter mit Aktivierungseinheiten
   103 Aktivierungsindexparameter
20 Elektronische Steuervorrichtung
   201 Sensorik
      2011 Interface
   202 Messparameter
      2021 Geographische Ortsparameter
      2022 Physikalische Messparameter
   203 Messereignis
   204 Schwellwert
   205 Zeitfenster
   206 Aktivierungsstapelspeicher
      2061 Stapelspeicherhöhenwert
      2062 Aktivierungseinheit
      2063 Klassierungsfaktor
      2064 Aktivierungsklasse
   207 Netzwerkschnittstelle
21 Countermodul
   211 Countersignal
22 MonteCarlo-Modul
23 Filtermodul
24 Speichereinheit
25 Topographischen Lookup-Table
251 Lookup-Table Element
26 Extrapolationsmodul
   261 Ereignisfunktionen
30 Überwachtes Gebiet
31 Topographischen Grid
40 Betriebsvorrichtung
   401 Betriebsstörungsparamter
   402 Messvorrichtungen zur Messung von Betriebsstörungen
50 Netzwerk

## Patentansprüche

1. Verfahren zur elektronischen Steuerung von zellulären, geographisch verteilten Alarmsystemen (10/11), wobei mittels einer Sensorik (201) einer Steuervorrichtung (20) physikalische Messparameter (202) von sich ereignender Messereignissen (203), welche einen Alarm oder Betriebsintervention notwendig machen, getriggert werden, und basierend auf vordefinierten Schwellwerten (204) gefiltert werden und wobei die Alarmsysteme (10/11) mittels der Steuervorrichtung (20) elektronisch selektiert und aktiviert werden, falls mindestens ein entsprechender Schwellwert (204) eines Messereignisses (203) überschritten wird, und wobei zur Aktivierung mittels der Steuervorrichtung (20) gridzellenweise abgestufte Aktivierungssignale (101) generiert, auf die zellulären Alarmsysteme (10/11) übertragen werden und die zellulären Alarmsysteme (10/11) entsprechend aktiviert werden, **dadurch gekennzeichnet,**
**dass** mittels eines Countermoduls (21) der Steuervorrichtung (20) innerhalb eines vordefinierten Zeitfensters (205) bei jeder Aktivierung Aktivierungsparameter (102) der durch die Steuervorrichtung (20) generierten Aktivierungssignale (101) kumuliert und in einer Speichereinheit (24) der Steuervorrichtung (20) als Countersignal (211) abgespeichert werden, wobei jedes Aktivierungssignal (101) mindestens einen Aktivierungsparameter (10/11) entsprechend dem Umfang der Aktivierung des entsprechenden Alarmsystems (10/11) umfasst, und wobei die Kumulierung mittels normierter Einheiten erfolgt,
**dass** basierend auf dem kumulierten Countersignal (211) in Kombination mit der geographischen Verteilung der Alarmsysteme (10/11) innerhalb des mittels der Steuervorrichtung (20) und der zugeordneten Sensorik (201) überwachten Gebiets (30) mittels eines MonteCarlo-Moduls (22) zugeordnete Aktivierungsindexparameter (103) bestimmt werden, welche mindestens eine mittlere Aktivierung der Alarmsysteme (10/11) im überwachten Gebiet (30) umfassen,
**dass** die Messparameter (202) des Messereignisses (203) geographische Ortsparameter (2021) sowie physikalische Messparameter (2022) umfassen, wobei mittels eines Filtermoduls (23) nach Ablauf des Zeitfensters (205) der Aktivierungsindexparameter (103) mittels des topographischen Grids (31) des überwachten Gebietes (30) dynamisch basierend auf den geographischen Ortsparameter (2021) sowie den physikalischen Messparameter (2022) gewichtet und in einer gridbasierten, topographischen Lookup-Table (25) abgespeichert werden, wobei zur dynamischen Gewichtung die Messparameter (202) mittels eines Extrapolations-Moduls (26) der Steuervorrichtung (20) basierend auf abgespeicherten modellierten Ereignisfunktionen (261) fortgepflanzt werden, und wobei das Extrapolations-Modul (26) die Selektion einer bestimmten Ereignisfunktion (261) basierend auf den gemessenen Messparameter 202 durchführt,
**dass** die auf die Alarmsysteme (10/11) übertragenen Aktivierungssignale (101) gridzellenweise abgestuft basierend auf den dynamischen Lookup-Table Elementen (251) generiert werden, wobei die jeweiligen Aktivierungsparameter (102) eines Aktivierungssignals (101) dem jeweiligen dynamischen Lookup-Table Element (251) entsprechen.

2. Verfahren nach Anspruch 1, **dadurch gekennzeichnet, dass** die Sensorik (201) der elektronischen Steuervorrichtung (20) Messvorrichtungen (402) zur Detektion von Betriebsstörungen von zugeordneten Betriebsvorrichtungen (40) umfasst, wobei mittels eines Interfacemoduls (2011) Betriebsstörungsparameter (401) der betroffenen Betriebsvorrichtungen (40) auf die Steuervorrichtung (20) übertragen werden und wobei die Aktivierungssignale (101) zusätzlich basierend auf den Betriebsstörungsparameter (401) generiert werden.

3. Verfahren nach einem der Ansprüche 1 oder 2, **dadurch gekennzeichnet, dass** die physikalischen Messparameter (202) der sich ereignender Messereignissen (203) Windstärke und/oder Temperaturparameter und/oder Luftdruck und/oder Feuchtigkeitsparameter und/oder seismische Bebenfaktoren umfassen.

4. Verfahren nach einem der Ansprüche 1 bis 3, **dadurch gekennzeichnet, dass** beim Auslösen des Zeitfensters (205) die Steuervorrichtung (20) zur Aktivierung der Alarmsysteme (10/11) nur freigeschaltet wird, falls ein vorbestimmter Stapelspeicherhöhenwert (2061) eines Aktivierungsstapelspeichers (206) der Steuervorrichtung (20) erreicht ist.

5. Verfahren nach Anspruch 4, **dadurch gekennzeichnet, dass** der Aktivierungsstapelspeicher (206) vor Auslösen des Zeitfensters (205) mittels mindestens einer einem Messereignis (203) zugeordneten Aktivierungseinheit (2062) schrittweise inkrementiert werden, wobei der Stapelspeicherhöhenwert (2061) innerhalb des Zeitfensters (205) basierend auf dem Countersignal (211) des Countermoduls (21) dekrementiert wird und wobei nach Ablauf des Zeitfensters (205) basierend auf dem Stapelspeicherhöhenwert (2061) Vergütungsparameter entsprechend der beanspruchten Leistung auf die Aktivierungseinheiten (2062) übertragen werden.

6. Verfahren nach einem der Ansprüche 1 bis 5, **dadurch gekennzeichnet, dass** die Alarmsysteme (10/11) einen zugeordnet abgespeicherten Klassierungsfaktor (2063) mit mindestens zwei unterschiedlichen Aktivierungsklassen (2064) umfassen, wobei jedes Alarmsystem (10/11) mindestens einer Aktivierungsklasse (2064) zugeordnet ist und beim Überschreiten des kumulierten Countersignals (211) des Countermoduls (21) die Steuerungsvorrichtung (20) automatisch die Aktivierungsklasse (2064) der Alarmsysteme (10/11) wechselt.

7. Verfahren nach einem der Ansprüche 1 bis 6, **dadurch gekennzeichnet, dass** die Steuerungsvorrichtung (20) eine Netzwerkschnittstelle (207) umfasst, wobei die Steuerungsvorrichtung (11) über die Netzwerkschnittstelle (207) mit der Sensorik (201) verbunden ist, und wobei die Sensorik (201) in zelluläre, geographisch und/oder topologisch definierbare Einheiten oder Zonen angeordnet sind und mittels der Netzwerkschnittstelle (207) geophysikalische, atmosphärische und/oder maritime physikalische Messparameter (202) von der Sensorik (201) auf die Steuerungsvorrichtung (20) übertragen werden.

8. Verfahren nach einem der Ansprüche 1 bis 7, **dadurch gekennzeichnet, dass** die Übertragung der Messparameter (202) von der Sensorik (201) auf die Steuerungsvorrichtung (20) periodisch und/oder auf Request der Steuerungsvorrichtung (20) und/oder der Sensorik (201) erfolgt.

9. Verfahren nach einem der Ansprüche 1 bis 8, **dadurch gekennzeichnet, dass** die Sensorik (201) Messsensoren umfassen, die mit der Sensorik (201) über eine Luftschnittstelle oder eine fest verdrahtete Schnittstelle oder über eine kontaktbehaftete Schnittstelle verbunden sind.

10. Elektronische Steuervorrichtung (20) zur Steuerung von zellulären, geographisch verteilten Alarmsystemen (10/11), wobei die Steuervorrichtung (20) eine Sensorik (201) zum Erfassen und Triggern von physikalischen Messparametern (202) von sich ereignender Messereignissen (203), welche einen Alarm oder Betriebsintervention notwendig machen, und ein Filtermodul (23) zum Filtern der Messparameter (202) basierend auf vordefinierten Schwellwerten (204) umfasst, wobei die Alarmsysteme (10/11) mittels der Steuervorrichtung (20) elektronisch selektierbar und aktivierbar sind, falls mindestens ein Schwellwert (204) eines Messereignisses (203) überschritten wird und wobei die Aktivierung basierend auf mittels der Steuervorrichtung (20) generierten und auf die jeweiligen Alarmsysteme (10/11) übertragenen, gridzellenweise abgestuften Aktivierungssignalen (101) realisiert ist, **dadurch gekennzeichnet,**
**dass** die Steuervorrichtung (20) ein Countermodul (21) umfasst, wobei mittels des Countermoduls (21) innerhalb eines vordefinierten Zeitfensters (205) bei jeder Aktivierung Aktivierungsparameter (102) der durch die Steuervorrichtung (20) generierten Aktivierungssignale (101) kumulierbar und in einer Speichereinheit (24) der Steuervorrichtung (20) als Countersignal (211) abspeicherbar ist, wobei jedes Aktivierungssignal (101) mindestens einen Aktivierungsparameter (102) entsprechend dem Umfang der Aktivierung des entsprechenden Alarmsystems (10/11) umfasst, und wobei die Kumulierung mittels normierter Einheiten erfolgt,
**dass** die Steuervorrichtung (20) ein MonteCarlo-Modul (22) umfasst, wobei mittels des MonteCarlo-Moduls (22) basierend auf dem kumulierten Countersignal (211) in Kombination mit der geographischen Verteilung der Alarmsysteme (10/11) innerhalb des mittels der Steuervorrichtung (20) und der zugeordneten Sensorik (201) überwachten Gebiets (30) zugeordnete Aktivierungsindexparameter (103) bestimmbar sind, welche mindestens eine mittlere Aktivierung der Alarmsysteme (10/11) im überwachten Gebiet umfassen,
wobei mittels des Filtermoduls (23) nach Ablauf des Zeitfensters (205) der Aktivierungsindexparameter (103) mittels eines topographischen Grids (31) des überwachten Gebietes (30) dynamisch basierend auf geographische Ortsparameter (2021) sowie physikalischen Messparameter (2022) der Messparameter (202) gewichtbar und in einer gridbasierten, topographischen Lookup-Table (25) abspeichert sind, wobei mittels eines ExtrapolationsModuls (26) der Steuervorrichtung (20) zur dynamischen Gewichtung die Messparameter (202) basierend auf abgespeicherten modellierten Ereignisfunktionen (261) extrapolierbar sind, und wobei das Extrapolations-Modul (26) die Selektion einer bestimmten Ereignisfunktion (261) basierend auf den gemessenen Messparameter 202 durchführt, und
**dass** die auf die Alarmsysteme (10/11) übertragenen Aktivierungssignale (101) gridzellenweise abgestuft basierend auf den dynamischen Lookup-Table Elementen (251) generiert sind, wobei die jeweiligen Aktivierungsparameter (102) eines Aktivierungssignals (101) dem jeweiligen dynamischen Lookup-Table Element (251) entsprechen.

11. Elektronische Steuervorrichtung (20) nach Anspruch 10, **dadurch gekennzeichnet, dass** die Sensorik (201) der elektronischen Steuervorrichtung (20) Messvorrichtungen (402) zur Detektion von Betriebsstörungen von zugeordneten Betriebsvorrichtungen (40) umfasst, wobei mittels eines Interfacemoduls (2011) Betriebsstörungsparameter (401) der betroffenen Betriebsvorrichtungen (40) auf die Steuervorrichtung (20) übertragbar sind und wobei die Aktivierungssignale (101) zusätzlich basierend auf den Betriebsstörungsparameter (401) generierbar sind.

12. Elektronische Steuervorrichtung (20) nach einem der Ansprüche 10 oder 11, **dadurch gekennzeichnet, dass** die physikalischen Messparameter (202) der sich erereignenden Messergebnisse (203) Windstärke und/oder Temperaturparameter und/oder Luftdruck und/oder Feuchtigkeitsparameter und/oder seismische Bebenfaktoren umfassen.

13. Elektronische Steuervorrichtung (20) nach einem der Ansprüche 10 bis 12, **dadurch gekennzeichnet, dass** beim Auslösen des Zeitfensters (205) die Steuervorrichtung (20) zur Aktivierung der Alarmsysteme (10/11) nur freischaltbar ist, falls ein Stapelspeicherhöhenwert (2061) eines Aktivierungsstapelspeichers (206) der Steuerungsvorrichtung (20) erreicht ist.

14. Elektronische Steuervorrichtung (20) nach Anspruch 13, **dadurch gekennzeichnet, dass** der Aktivierungsstapelspeicher (206) vor Auslösen des Zeitfensters (205) mittels mindestens einer einem Messereignis (203) zugeordneten Aktivierungseinheit (2062) schrittweise inkrementiert ist, wobei der Stapelspeicherhöhenwert (2061) innerhalb des Zeitfensters (205) basierend auf dem Countersignal (211) des Countermoduls (21) dekrementierbar ist und wobei nach Ablauf des Zeitfensters (205) basierend auf dem Stapelspeicherhöhenwert (2061) Vergütungsparameter entsprechend der beanspruchten Leistung auf die Aktivierungseinheiten (2062) übertragbar sind.

15. Elektronische Steuervorrichtung (20) nach einem der Ansprüche 10 bis 14, **dadurch gekennzeichnet, dass** die Alarmsysteme (10/11) einen zugeordnet abgespeicherten Klassierungsfaktor (2063) mit mindestens zwei unterschiedlichen Aktivierungsklassen (2064) umfassen, wobei jedes Alarmsystem (10/11) mindestens einer Aktivierungsklasse (2064) zugeordnet ist und beim Überschreiten des kumulierten Countersignals (211) des Countermoduls (21) die Steuerungsvorrichtung (20) automatisch die Aktivierungsklasse (2064) der Alarmsysteme (10/11) wechselt.

16. Elektronische Steuervorrichtung (20) nach einem der Ansprüche 10 bis 15, **dadurch gekennzeichnet, dass** die Steuerungsvorrichtung (20) eine Netzwerkschnittstelle (207) umfasst, wobei die Steuerungsvorrichtung (11) über die Netzwerkschnittstelle (207) mit der Sensorik (201) verbunden ist, und wobei die Sensorik (201) in zelluläre, geographisch und/oder topologisch definierbare Einheiten oder Zonen angeordnet sind und mittels der Netzwerkschnittstelle (207) geophysikalische, atmosphärische und/oder maritime physikalische Messparameter (202) von der Sensorik (201) auf die Steuerungsvorrichtung (20) übertragbar sind.

17. Elektronische Steuervorrichtung (20) nach einem der Ansprüche 10 bis 16, **dadurch gekennzeichnet, dass** die Übertragung der Messparameter (202) von der Sensorik (201) auf die Steuerungsvorrichtung (20) periodisch und/oder auf Request der Steuerungsvorrichtung (20) und/oder der Sensorik (201) erfolgt.

18. Elektronische Steuervorrichtung (20) nach einem der Ansprüche 10 bis 17, **dadurch gekennzeichnet, dass** die Sensorik (201) Messsensoren umfasst die mit der Sensorik (201) über eine Luftschnittstelle oder eine fest verdrahtete Schnittstelle oder über eine kontaktbehaftete Schnittstelle verbunden sind.

## Claims

1. A method for electronically controlling cellular, geographically distributed alarm systems (10/11), wherein by means of a sensor system (201) of a control device (20), physical measurement parameters of occurring measurement events (203) that necessitate an alarm or operational intervention are triggered, and are filtered based on predefined threshold values (204), and wherein the alarm systems (10/11) are electronically selected and activated by means of the control device (20) if at least one corresponding threshold value (204) of a measurement event (203) is exceeded, and wherein for activation, activation signals (101) are generated stepwise from grid cell to grid cell by means of the control device (20) and transmitted to the cellular alarm systems (10/11), and the cellular alarm systems (10/11) are correspondingly activated, **characterized in that**
activation parameters (102) of the activation signals (101) generated by the control device (20) are cumulated by means of a counter module (21) of the control device (20) within a predefined time window (205) upon each activation, and are stored as a counter signal (211) in a memory unit (24) of the control device (20), each activation signal (101) including at least one activation parameter (10/11) [sic; 102] corresponding to the extent of activation of the corresponding alarm system (10/11), and the cumulation taking place by means of normalized units,
based on the cumulated counter signal (211) in combination with the geographical distribution of the alarm systems (10/11) within the region (30) monitored by means of the control device (20) and the associated sensor system (201), associated activation index parameters (103) are determined by means of a Monte Carlo module (22), the activation index parameters including at least one mean activation of the alarm systems (10/11) in the monitored region (30),
the measurement parameters (202) of the measurement event (203) include geographical location parameters (2021) and physical measurement parameters (2022), the activation index parameters being dynamically weighted by means of a filter module (23) after expiration of the time window (205), based on the geographical location parameters (2021) and physical measurement parameters (2022), using the topographical grid (31) of the monitored region (30), and stored in a grid-based topographical lookup table (25), wherein for dynamic weighting, the measurement parameters (202) are propagated by means of an extrapolation module (26) of the control device (20), based on stored modeled event functions (261), and the extrapolation module (26) carries out the selection of a specified event function (261) based on the measured measurement parameters (202),
the activation signals (101) transmitted to the alarm systems (10/11) are generated stepwise from grid cell to grid cell based on the dynamic lookup table elements (251), the respective activation parameters (102) of an activation signal (101) corresponding to the respective dynamic lookup table element (251).

2. The method according to Claim 1, **characterized in that** the sensor system (201) of the electronic control device (20) includes measuring devices (402) for detecting operational disturbances of associated operating devices (40), wherein operational disturbance parameters (401) of the affected operating devices (40) are transmitted to the control device (20) by means of an interface module (2011), and the activation signals (101) are additionally generated based on the operational disturbance parameters (401).

3. The method according to one of Claims 1 or 2, **characterized in that** the physical measurement parameters (202) of the occurring measurement events (203) include wind strength and/or temperature parameters and/or air pressure and/or humidity parameters and/or seismic earthquake factors.

4. The method according to one of Claims 1 to 3, **characterized in that** when the time window (205) is activated, the control device (20) is enabled to activate the alarm systems (10/11) only if a predefined stack memory level value (2061) of an activation stack memory (206) of the control device (20) is attained.

5. The method according to Claim 4, **characterized in that** prior to activation of the time window (205), the activation stack memory (206) is progressively incremented by means of at least one activation unit (2062) associated with a measurement event (203), the stack memory level value (2061) being decremented within the time window (205) based on the counter signal (211) of the counter module (21), and payment parameters corresponding to the service availed of being transmitted to the activation units (2062), based on the stack memory level value (2061), after expiration of the time window (205).

6. The method according to one of Claims 1 to 5, **characterized in that** the alarm systems (10/11) include a classification factor (2063), stored in an associated manner, having at least two different activation classes (2064), each alarm system (10/11) being associated with at least one activation class (2064), and the control device (20) automatically changing the activation class (2064) of the alarm systems (10/11) when the cumulated counter signal (211) of the counter module (21) is exceeded.

7. The method according to one of Claims 1 to 6, **characterized in that** the control device (20) includes a network interface (207), the control device (20) being connected to the sensor system (201) via the network interface (207), and the sensor system (201) being situated in cellular, geographically and/or topologically definable units or zones, and geophysical, atmospheric, and/or maritime physical measurement parameters (202) being transmitted from the sensor system (201) to the control device (20) by means of the network interface (207).

8. The method according to one of Claims 1 to 7, **characterized in that** the transmission of the measurement parameters (202) from the sensor system (201) to the control device (20) takes place periodically and/or upon request by the control device (20) and/or the sensor system (201).

9. The method according to one of Claims 1 to 8, **characterized in that** the sensor system (201) includes measuring sensors that are connected to the sensor system (201) via an air interface or a hard-wired interface or via a contact interface.

10. An electronic control device (20) for controlling cellular, geographically distributed alarm systems (10/11), wherein the control device (20) includes a sensor system (201) for acquiring and triggering physical measurement parameters (202) of occurring measurement events (203) that necessitate an alarm or operational intervention, and a filter module (23) for filtering the measurement parameters (202) based on predefined threshold values (204), the alarm systems (10/11) being electronically selectable and activatable by means of the control device (20) if at least one threshold value (204) of a measurement event (203) is exceeded, and the activation being implemented based on activation signals (101) that are generated stepwise from grid cell to grid cell by means of the control device (20) and transmitted to the respective alarm systems (10/11), **characterized in that**
the control device (20) includes a counter module (21), wherein activation parameters (102) of the activation signals (101) generated by the control device (20) are cumulatable by means of the counter module (21) within a predefined time window (205) upon each activation, and are storable as a counter signal (211) in a memory unit (24) of the control device (20), each activation signal (101) including at least one activation parameter (102) corresponding to the extent of activation of the corresponding alarm system (10/11), and the cumulation taking place by means of normalized units,
the control device (20) includes a Monte Carlo module (22), associated activation index parameters (103) being determinable by means of the Monte Carlo module (22), based on the cumulated counter signal (211) in combination with the geographical distribution of the alarm systems (10/11) within the region (30) monitored by means of the control device (20) and the associated sensor system (201), the activation index parameters including at least one mean activation of the alarm systems (10/11) in the monitored region,
wherein the activation index parameters (103) are dynamically weightable by means of the filter module (23) after expiration of the time window (205), based on geographical location parameters (2021) and physical measurement parameters (2022) of the measurement parameters (202), using a topographical grid (31) of the monitored region (30), and stored in a grid-based topographical lookup table (25), wherein for dynamic weighting, the measurement parameters (202) are extrapolatable by means of an extrapolation module (26) of the control device (20), based on stored modeled event functions (261), and the extrapolation module (26) carries out the selection of a specified event function (261) based on the measured measurement parameters (202), and
the activation signals (101) transmitted to the alarm systems are (10/11) are generated stepwise from grid cell to grid cell based on the dynamic lookup table elements (251), the respective activation parameters (102) of an activation signal (101) corresponding to the respective dynamic lookup table element (251).

11. The electronic control device (20) according to Claim 10, **characterized in that** the sensor system (201) of the electronic control device (20) includes measuring devices (402) for detecting operational disturbances of associated operating devices (40), operational disturbance parameters (401) of the affected operating devices (40) being transmittable to the control device (20) by means of an interface module (2011), and the activation signals (101) being additionally generatable based on the operational disturbance parameters (401).

12. The electronic control device (20) according to one of Claims 10 or 11, **characterized in that** the physical measurement parameters (202) of the occurring measurement events (203) include wind strength and/or temperature parameters and/or air pressure and/or humidity parameters and/or seismic earthquake factors.

13. The electronic control device (20) according to one of Claims 10 to 12, **characterized in that** when the time window (205) is activated, the control device (20) is enabled to activate the alarm systems (10/11) only if a stack memory level value (2061) of an activation stack memory (206) of the control device (20) is attained.

14. The electronic control device (20) according to Claim 13, **characterized in that** prior to activation of the time window (205), the activation stack memory (206) is progressively incremented by means of at least one activation unit (2062) associated with a measurement event (203), the stack memory level value (2061) being decrementable within the time window (205) based on the counter signal (211) of the counter module (21), and payment parameters corresponding to the service availed of being transmittable to the activation units (2062), based on the stack memory level value (2061), after expiration of the time window (205).

15. The electronic control device (20) according to one of Claims 10 to 14, **characterized in that** the alarm systems (10/11) include a classification factor (2063), stored in an associated manner, having at least two different activation classes (2064), each alarm system (10/11) being associated with at least one activation class (2064), and the control device (20) automatically changing the activation class (2064) of the alarm systems (10/11) when the cumulated counter signal (211) of the counter module (21) is exceeded.

16. The electronic control device (20) according to one of Claims 10 to 15, **characterized in that** the control device (20) includes a network interface (207), the control device (11) [sic; (20)] being connected to the sensor system (201) via the network interface (207), and the sensor system (201) being situated in cellular, geographically and/or topologically definable units or zones, and geophysical, atmospheric, and/or maritime physical measurement parameters (202) being transmittable from the sensor system (201) to the control device (20) by means of the network interface (207).

17. The electronic control device (20) according to one of Claims 10 to 16, **characterized in that** the transmission of the measurement parameters (202) from the sensor system (201) to the control device (20) takes place periodically and/or upon request by the control device (20) and/or the sensor system (201).

18. The electronic control device (20) according to one of Claims 10 to 17, **characterized in that** the sensor system (201) includes measuring sensors that are connected to the sensor system (201) via an air interface or a hard-wired interface or via a contact interface.

## Revendications

1. Procédé de commande électronique de systèmes d'alarme cellulaires (10/11), géographiquement répartis, dans lequel, au moyen d'un système de capteurs (201) d'un dispositif de commande (20), des paramètres de mesure physiques (202) provenant d'événements de mesure (203) qui surviennent et nécessitent une alarme ou une intervention opérationnelle sont déclenchés et sont filtrés sur la base de valeurs de seuil prédéfinies (204), et dans lequel les systèmes d'alarme (10/11) sont sélectionnés et activés électroniquement au moyen du dispositif de commande (20) si au moins une valeur de seuil correspondante (204) d'un événement de mesure (203) est dépassée, et dans lequel, pour l'activation au moyen du dispositif de commande (20), des signaux d'activation (101) échelonnés par cellule de grille sont générés et transmis aux systèmes d'alarme cellulaires (10/11), et les systèmes d'alarme cellulaires (10/11) sont activés en conséquence,
**caractérisé en ce qu'**au moyen d'un module de compteur (21) du dispositif de commande (20), à l'intérieur d'une fenêtre de temps prédéfinie (205) à chaque activation, des paramètres d'activation (102) des signaux d'activation (101) générés par le dispositif de commande (20) sont cumulés et mémorisés dans une unité de mémoire (24) du dispositif de commande (20) comme un signal de compteur (211), dans lequel chaque signal d'activation (101) comprend au moins un paramètre d'activation (10/11) correspondant au degré d'activation du système d'alarme (10/11) correspondant, et dans lequel le cumul est effectué au moyen d'unités standardisées,
**en ce que** sur la base du signal de compteur (211) cumulé en combinaison avec la répartition géographique des systèmes d'alarme (10/11) à l'intérieur de la région (30) surveillée au moyen du dispositif de commande (20) et du système de capteurs (201) attribué, des paramètres d'indice d'activation (103) attribués comprenant au moins une activation moyenne des systèmes d'alarme (10/11) dans la région surveillée (30) sont déterminés au moyen d'un module de Monte-Carlo,
**en ce que** les paramètres de mesure (20) de l'événement de mesure (203) comprennent des paramètres de lieu géographique (2021) ainsi que des paramètres de mesure physiques (2022), dans lequel, au moyen d'un module de filtre (23), à l'expiration de la fenêtre de temps (205), les paramètres d'indice d'activation (103) sont pondérés de manière dynamique au moyen de la grille topographique (31) de la région surveillée (30) sur la base des paramètres de lieu géographique (2021) ainsi que des paramètres de mesure physiques (2022) et mémorisés dans une table de consultation (25) topographique basée sur une grille, dans lequel, pour la pondération dynamique, les paramètres de mesure (202) sont propagés au moyen d'un module d'extrapolation (26) du dispositif de commande (20) sur la base de fonctions d'événement modélisées (261) mémorisées, et dans lequel le module d'extrapolation (26) effectue la sélection d'une certaine fonction d'événement (261) sur la base des paramètres de mesure (202),
**en ce que** les signaux d'activation (101) transmis aux systèmes d'alarme (10/11) sont générés de manière échelonnée par cellule de grille sur la base des éléments de table de consultation dynamique (251), dans lequel les paramètres d'activation respectifs (102) d'un signal d'activation (101) correspondent à l'élément de table de consultation dynamique (251) respectif.

2. Procédé selon la revendication 1, **caractérisé en ce que** le système de capteurs (201) du dispositif de commande électronique (20) comprend des dispositifs de mesure (402) pour détecter des dysfonctionnements de dispositifs opérationnels attribués (40), dans lequel, au moyen d'un module d'interface (2011), des paramètres de dysfonctionnement (401) des dispositifs opérationnels (40) concernés sont transmis sur le dispositif de commande (20), et dans lequel les signaux d'activation (101) sont de plus générés sur la base des paramètres de dysfonctionnement (401).

3. Procédé selon l'une quelconque des revendications 1 ou 2, **caractérisé en ce que** les paramètres de mesure physiques (202) des événements de mesure (203) qui surviennent comprennent des paramètres de force du vent et/ou de température et/ou des paramètres de pression atmosphérique et/ou d'humidité et/ou des facteurs de secousses sismiques.

4. Procédé selon l'une quelconque des revendications 1 à 3, **caractérisé en ce que**, lorsque la fenêtre de temps (205) est déclenchée, le dispositif de commande (20) n'est débloqué pour activer les systèmes d'alarme (10/11) que si une valeur de niveau de pile (2061) prédéterminée d'une pile d'activation (206) du dispositif de commande (20) est atteinte.

5. Procédé selon la revendication 4, **caractérisé en ce qu'**avant le déclenchement de la fenêtre de temps (205), la pile d'activation (206) est incrémentée progressivement au moyen d'au moins une unité d'activation (2062) attribuée à un événement de mesure, dans lequel, à l'intérieur de la fenêtre de temps (205), la valeur de niveau de pile (2061) est décrémentée sur la base du signal de compteur (211) du module de compteur (21), et dans lequel, à l'expiration de la fenêtre de temps (205), sur la base de la valeur de niveau de pile (2061), des paramètres de compensation sont transmis aux unités d'activation (2062) en fonction de la puissance sollicitée.

6. Procédé selon l'une quelconque des revendications 1 à 5, **caractérisé en ce que** les systèmes d'alarme (10/11) comprennent un facteur de classification (2063) mémorisé de manière attribuée avec au moins deux classes d'activation (2064) différentes, dans lequel chaque système d'alarme (10/11) se voit attribuer au moins une classe d'activation (2064), et en cas de dépassement du signal de compteur cumulé (211) du module de compteur (21), le dispositif de commande (20) change automatiquement la classe d'activation (2064) du système d'alarme (10/11).

7. Procédé selon l'une quelconque des revendications 1 à 6, **caractérisé en ce que** le dispositif de commande (20) comprend une interface de réseau (207), dans lequel le dispositif de commande (11) est relié au système de capteurs (201) par l'interface de réseau (207), et dans lequel le système de capteurs (201) est agencé en unités ou zones cellulaires, définissables de manière géographique et/ou topologique, et des paramètres de mesure physiques (202) géophysiques, atmosphériques et/ou maritimes sont transmis du système de capteurs (201) au dispositif de commande (20) au moyen de l'interface de réseau (207).

8. Procédé selon l'une quelconque des revendications 1 à 7, **caractérisé en ce que** la transmission des paramètres de mesure (202) du système de capteurs (201) au dispositif de commande (20) est effectuée périodiquement et/ou à la demande du dispositif de commande (20) et/ou du système de capteurs (201).

9. Procédé selon l'une quelconque des revendications 1 à 8, **caractérisé en ce que** le système de capteurs (201) comprend des capteurs de mesure reliés au système de capteurs (201) par une interface radio ou une interface câblée ou par une interface avec contact.

10. Dispositif de commande électronique (20) pour commander des systèmes d'alarme cellulaires, géographiquement répartis (10/11), dans lequel le dispositif de commande (20) comprend un système de capteurs (201) pour acquérir et déclencher des paramètres de mesure physiques (202) provenant d'événements de mesure (203) qui surviennent et nécessitent une alarme ou une intervention opérationnelle et un module de filtre (23) pour filtrer les paramètres de mesure (202) sur la base de valeurs de seuil prédéfinies (204), dans lequel les systèmes d'alarme (10/11) peuvent être sélectionnés et activés électroniquement au moyen du dispositif de commande (20), si au moins une valeur de seuil (204) d'un événement de mesure (203) est dépassée, et dans lequel l'activation est réalisée sur la base de signaux d'activation (101) échelonnés par cellule de grille, générés au moyen du dispositif de commande (20) et transmis aux systèmes d'alarme (10/11) respectifs,
**caractérisé en ce que**
le dispositif de commande (20) comprend un module de compteur (21), dans lequel, au moyen du module de compteur (21), à l'intérieur d'une fenêtre de temps prédéfinie (205) à chaque activation, des paramètres d'activation (102) des signaux d'activation (101) générés par le dispositif de commande (20) peuvent être cumulés et mémorisés dans une unité de mémoire (24) du dispositif de commande (20) comme un signal de compteur (211), dans lequel chaque signal d'activation (101) comprend au moins un paramètre d'activation (10/11) correspondant au degré d'activation du système d'alarme (10/11) correspondant, et dans lequel le cumul est effectué au moyen d'unités standardisées,
**en ce que** le dispositif de commande (20) comprend un module de Monte-Carlo (22), dans lequel, au moyen du module de Monte-Carlo (22), sur la base du signal de compteur (211) cumulé en combinaison avec la répartition géographique des systèmes d'alarme (10/11) à l'intérieur de la région (30) surveillée au moyen du dispositif de commande (20) et du système de capteurs (201) attribué, des paramètres d'indice d'activation (103) attribués peuvent être déterminés qui comprennent au moins une activation moyenne des systèmes d'alarme (10/11) dans la région surveillée (30),
dans lequel, au moyen du module de filtre (23), à l'expiration de la fenêtre de temps (205), les paramètres d'indice d'activation (103) peuvent être pondérés de manière dynamique au moyen d'une grille topographique (31) de la région surveillée (30) sur la base de paramètres de lieu géographique (2021) ainsi que de paramètres de mesure physiques (2022) et sont mémorisés dans une table de consultation (25) topographique basée sur une grille, dans lequel, au moyen d'un module d'extrapolation (26) du dispositif de commande (20), pour la pondération dynamique, les paramètres de mesure (202) peuvent être extrapolés sur la base de fonctions d'événement modélisées (261) mémorisées, et dans lequel le module d'extrapolation (26) effectue la sélection d'une certaine fonction d'événement (261) sur la base des paramètres de mesure (202), et
**en ce que** les signaux d'activation (101) transmis aux systèmes d'alarme (10/11) sont générés de manière échelonnée par cellule de grille sur la base des éléments (251) de la table de consultation dynamique, dans lequel les paramètres d'activation (102) respectifs d'un signal d'activation (101) correspondent à l'élément de table de consultation dynamique (251) respectif.

11. Dispositif de commande électronique (20) selon la revendication 10, **caractérisé en ce que** le système de capteurs (201) du dispositif de commande électronique (20) comprend des dispositifs de mesure (402) pour détecter des dysfonctionnements de dispositifs opérationnels (40) attribués, dans lequel, au moyen d'un module d'interface (2011), des paramètres de dysfonctionnement (401) des dispositifs opérationnels (40) concernés peuvent être transmis au dispositif de commande (20), et dans lequel les signaux d'activation (101) peuvent en outre être générés sur la base des paramètres de dysfonctionnement (401).

12. Dispositif de commande électronique (20) selon l'une quelconque des revendications 10 ou 11, **caractérisé en ce que** les paramètres de mesure physiques (202) des événements de mesure (203) qui surviennent comprennent des paramètres de force du vent et/ou de température et/ou des paramètres de pression atmosphérique et/ou d'humidité et/ou des facteurs de secousses sismiques.

13. Dispositif de commande électronique (20) selon l'une quelconque des revendications 10 à 12, **caractérisé en ce que**, lorsque la fenêtre de temps (205) est déclenchée, le dispositif de commande (20) ne peut être débloqué pour activer les systèmes d'alarme (10/11) que si une valeur de niveau de pile (2061) prédéterminée d'une pile d'activation (206) du dispositif de commande (20) est atteinte.

14. Dispositif de commande électronique (20) selon la revendication 13, **caractérisé en ce qu'**avant le déclenchement de la fenêtre de temps (205), la pile d'activation (206) est incrémentée progressivement au moyen d'au moins une unité d'activation (2062) attribuée à un événement de mesure, dans lequel, à l'intérieur de la fenêtre de temps (205), la valeur de niveau de pile (2061) peut être décrémentée sur la base du signal de compteur (211) du module de compteur (21), et dans lequel, à l'expiration de la fenêtre de temps (205), sur la base de la valeur de niveau de pile (2061), des paramètres de compensation peuvent être transmis aux unités d'activation (2062) en fonction de la puissance sollicitée.

15. Dispositif de commande électronique (20) selon l'une quelconque des revendications 10 à 14, **caractérisé en ce que** les systèmes d'alarme (10/11) comprennent un facteur de classification (2063) mémorisé de manière attribuée avec au moins deux classes d'activation (2064) différentes, dans lequel chaque système d'alarme (10/11) se voit attribuer au moins une classe d'activation (2064), et en cas de dépassement du signal de compteur cumulé (211) du module de compteur (21), le dispositif de commande (20) change automatiquement la classe d'activation (2064) du système d'alarme (10/11).

16. Dispositif de commande électronique (20) selon l'une quelconque des revendications 10 à 15, **caractérisé en ce que** le dispositif de commande (20) comprend une interface de réseau (207), dans lequel le dispositif de commande (11) est relié au système de capteurs (201) par l'interface de réseau (207), et dans lequel le système de capteurs (201) est agencé en unités ou zones cellulaires, définissables de manière géographique et/ou topologique, et des paramètres de mesure physiques (202) géophysiques, atmosphériques et/ou maritimes peuvent être transmis du système de capteurs (201) au dispositif de commande (20) au moyen de l'interface de réseau (207).

17. Dispositif de commande électronique (20) selon l'une quelconque des revendications 10 à 16, **caractérisé en ce que** la transmission des paramètres de mesure (202) du système de capteurs (201) au dispositif de commande (20) est effectuée périodiquement et/ou à la demande du dispositif de commande (20) et/ou du système de capteurs (201).

18. Dispositif de commande électronique (20) selon l'une quelconque des revendications 10 à 17, **caractérisé en ce que** le système de capteurs (201) comprend des capteurs de mesure reliés au système de capteurs (201) par une interface radio ou par une interface câblée ou par une interface avec contact.
